# EUROPÄISCHE PATENTSCHRIFT

(11) **EP 2 464 233 B1**
(45) Veröffentlichungstag und Bekanntmachung des Hinweises auf die Patenterteilung: **03.01.2018**
(21) Anmeldenummer: 10744884.7
(22) Anmeldetag: 06.08.2010
(51) Int. Cl.: A01N 43/707, A01N 25/04, A01P 13/00

(54) **ALUMINIUMSILIKAT-FREIE, HOCHKONZENTRIERTE SUSPENSIONSKONZENTRATE VON METRIBUZIN**
ALUMINIUM SILICATE-FREE, HIGHLY CONCENTRATED SUSPENSION CONCENTRATES OF METRIBUZIN
CONCENTRÉS DE SUSPENSION DE MÉTRIBUZINE SANS SILICATE D'ALUMINIUM ET HAUTEMENT CONCENTRÉS

(30) Priorität: 14.08.2009 EP 09010484; 14.08.2009 US 234035 P
(43) Veröffentlichungstag der Anmeldung: 20.06.2012
(73) Patentinhaber: Bayer Intellectual Property GmbH, 40789 Monheim am Rhein (DE)
(72) Erfinder: SIXL, Frank, 26529 Rechtsupweg (DE); BICKERS, Udo, 65779 Kelkheim (DE); KOPPERT, Harry, 65510 Idstein (DE); HOPERT, Jürgen, 65795 Hattersheim (DE)
(74) Vertreter: BIP Patents
(86) Internationale Anmeldenummer: PCT/EP2010/004818
(87) Internationale Veröffentlichungsnummer: WO 2011/018188

(56) Entgegenhaltungen:
- EP-A1- 1 790 228
- WO-A2-2009/021985

## Beschreibung

Die Erfindung betrifft das technische Gebiet der Formulierungen von Wirkstoffen.

Wirkstoffe können prinzipiell auf verschiedenste Art formuliert werden, wobei die Eigenschaften der Wirkstoffe und Art der Formulierung Probleme hinsichtlich der Herstellbarkeit, Stabilität, Anwendbarkeit und Wirksamkeit der Formulierungen aufwerfen können. Außerdem sind bestimmte Formulierungen aus ökonomischen und ökologischen Gründen vorteilhafter als andere.

Formulierungen auf Wasserbasis, wie wässrige Suspensionskonzentrate (SC), haben in der Regel den Vorteil, dass sie einen geringen bis keinerlei Anteil an organischen Lösungsmitteln benötigen. Wässrige Suspensionskonzentrate zur Formulierung von Wirkstoffen, aus den Bereichen Agrochemie sind bekannt. So werden beispielsweise in EP 0110174 A wässrige Suspensionskonzentrate von Pflanzenschutzmitteln beschrieben. Hier wird eine Mischung aus Formaldehydkondensationsprodukten bzw. Ligninsulfonaten und Netzmittel bevorzugt benutzt.

Daneben besteht generell ein Bedarf an hochkonzentrierten Formulierungen von Wirkstoffen, weil die höhere Konzentration vielerlei Vorteile hat. So wird beispielsweise bei hochkonzentrierten Formulierungen ein geringerer Verpackungsaufwand notwendig als bei niedrigkonzentrierten Formulierungen. Entsprechend reduziert sich der Aufwand für Herstellung, Transport und Lagerung; auch vereinfacht sich z.B. die Zubereitung der in der Landwirtschaft eingesetzten Spritzbrühen durch die kleineren Mengen an beispielsweise Pflanzenschutzmittel, welche gehandhabt werden müssen, wie z.B. beim Abfüll- und Verrührvorgang.

Höher konzentrierte wässrige Suspensionskonzentrate sind bekannt wie z.B. von Schwefel (EP 0220655 A), welches Mischungen aus Formaldehydkondensationsprodukten, bevorzugt Ligninsulfonate und Netzmittel, als Grundlage hat.

Bei den Wirkstoffen aus der Gruppe der 1,2,4-Triazinonen, wie Metamitron und Metribuzin, handelt es sich um hochwirksame Herbizide mit Wirkung gegen Schadpflanzen in Pflanzenkulturen. EP 0620971 A1 beschreibt für den Wirkstoff Metamitron ein höher konzentriertes wässriges Suspensionskonzentrat auf Basis von Mischungen aus ethoxylierten, ggf. phosphatgruppenhaltigen Tristyrol- und Alkyl-Phenolen sowie Ligninsulfonatsalzen. Die Verwendung dieser, in EP 0620971 A1 beschriebenen Formulierungsansätze für den Wirkstoff Metribuzin führte allerdings nicht zu den gewünschten Resultaten. Die Ursachen hierfür können einerseits darin begründet sein, dass Metribuzin schlechter benetzbar ist als Metamitron. EP 1790228 A1 beschreibt wie ein höher konzentriertes wässriges Suspensionskonzentrat für den Wirkstoff Metribuzin realisiert werden kann durch Verwendung einer Mischung aus Tensiden auf Basis substituierter Phenolether mit Verdickern auf Aluminiumsilikat-Basis, wie z.B. Attapulgite. In Abhängigkeit von der Partikellänge der Attapulgite bestehen jedoch möglicherweise gesundheitliche Risiken gemäß Berichten der IRAC (International Agency for Research on Cancer). Versuche auf Basis der Rezeptur der am Markt befindlichen, Aluminiumsilikat-freien SC-Formulierung mit 480 g Metribuzin Wirkstoffgehalt/L, welches 41 Gewichtsprozent (Gew.-%) entspricht, diese mit Wirkstoffgehalten von mehr als 500 g Wirkstoff/L (entsprechen ca. 43 Gew.-%) zu beladen, schlugen fehl. So erwies sich der Vermahlungsprozess über Perlmühlen als undurchführbar, da eine sofortige Verfestigung erfolgte.

Es bestand nun die Aufgabe für den Wirkstoff Metribuzin Formulierungen mit einer hohen Wirkstoffkonzentration zur Verfügung zu stellen, die Aluminiumsilikat-frei sind und die vorteilhafte Eigenschaften aufweisen, wie Lagerstabilität und niedrige Viskosität.

Daneben wird eine stabile Dispersion in der Spritzbrühe gefordert in der die hoch verdünnte Wirkstoffkonzentration über mehrere Stunden vor der Applikation stabil sein muss. Derartige Anforderungen an die Stabilität von Dispersionen in Spritzbrühen treten bei Formulierungen für die Saatgut-Behandlung (Saatgutbeizen, 'seed-treatment-formulations resp. compositions') gar nicht auf, da diese entweder konzentriert oder nur schwach verdünnt direkt auf das Saatgut aufgebracht werden. So liefern Veröffentlichungen aus diesem Bereich, wie beispielsweise WO 2009/021985 A2, die ausschließlich 'seed-treatment-compositions' behandelt, keinerlei geeignete technische Lehre für den Erhalt von stabilen Dispersionen in der Spritzbrühe.
Überraschenderweise wurde gefunden, dass diese Aufgabe durch die wässrigen Suspensionskonzentrate der vorliegenden Erfindung gelöst wird.
Gegenstand der Erfindung ist ein Aluminiumsilikat-freies, wässriges Suspensionskonzentrat, enthaltend folgende Komponenten
(A) 43 - 61 Gew.-% des Wirkstoffs Metribuzin,
(B) 2 - 10 Gew.-% eines oder mehrerer Tenside auf Basis nicht-ionischer Polymere aus der Gruppe 'acrylic grafted polymers',
(C) 0,05 - 0,3 Gew.-% eines oder mehrerer Verdicker auf Basis anionischer Heteropolysaccharide aus der Gruppe Xanthan gum,
(D) 0,1 - 10 Gew.-% eines oder mehrerer Netzmittel ausgewählt aus der Gruppe der alkoxylierten C₁₀-C₂₄- Alkohole.
(E) 0 - 1 Gew.-% eines oder mehrerer Entschäumer,
(F) 0 - 20 Gew.-% eines oder mehrerer Frostschutzmittels,
(G) 0 - 1 Gew.-% eines oder mehrerer Konservierungsmittels,
(H) 0 - 10 Gew.-% eines oder mehrerer weitere, von den zuvor genannten Komponenten verschiedene Tenside.
Unter dem Begriff "wässrige Suspensionskonzentrate" werden Suspensionskonzentrate auf Basis von Wasser verstanden. Der Anteil an Wasser in den erfindungsgemäßen Suspensionskonzentraten kann im allgemeinen 20 - 60 Gew.-%, vorzugsweise 25 - 35 Gew.-%, betragen; dabei bezieht sich die Angabe "Gew.-%" (Gewichtsprozent) hier und in der gesamten Beschreibung, wenn nicht anders definiert, auf das relative Gewicht der jeweiligen Komponente bezogen auf das Gesamtgewicht der Formulierung.
Der Wirkstoff Metribuzin (Komponente A) ist in "The Pesticide Manual", 14. Auflage, The British Crop Protection Council (2006) unter der Nummer 573 beschrieben. Der Wirkstoff (Komponente A) hat einen Mindestgehalt in den erfindungsgemäßen Suspensionskonzentraten von mehr als 43 Gew.-% (entsprechen mehr als 500 g Wirkstoff/L), bevorzugt 43 - 61 Gew.-% (entsprechen 500 - 700 g Wirkstoff/L), besonders bevorzugt 48 - 57 Gew.-% (entsprechen 550 - 650 g Wirkstoff/L) an der gesamten Formulierung.
Bei den Tensiden (Komponente B) auf Basis nicht-ionischer Polymere aus der Gruppe 'acrylic grafted polymers' handelt es sich beispielsweise um nichtionische, polymere Tenside mit "Kamm"-Struktur, insbesondere Polymethacrylatmethacrylsäure aufgepfropft ('grafted') mit Methoxypolyethylenoxid.
Beispiele für derartige Tenside sind u.a. Atlox 4913®, Tersperse 2500®, die auch beide bevorzugt sind.
Der Anteil an Tensiden (Komponente B) auf Basis nicht-ionischer Polymere aus der Gruppe 'acrylic grafted polymers' in den erfindungsgemäßen Suspensionskonzentraten beträgt 2 - 10 Gew.-%, besonders bevorzugt 3 - 6 Gew.-%.
Bei den Verdicker (Komponente C) auf Basis anionischer Heteropolysaccharide aus der Gruppe Xanthan gum, handelt es sich um ein Fermentationsprodukt von *Xanthomonas campestris*, in dessen Fermentationsmedium Kohlenhydrate (wie Zucker), eine Stickstoffquelle und Spurenelemente sowie weitere Wachstumsfaktoren enthalten sind. Sie unterscheiden sich von den in EP 1790228 A1 genannten Verdickern auf Aluminiumsilikat-Basis (wie Hectorite, Montmorillonite, Saponite, Kaolinite, Bentonite, Attapulgite etc.) dadurch, dass sie wasserlöslich und toxikologisch unbedenklich sind (so ist Xanthan gum z.B. ein zugelassener Zusatz in Lebensmitteln) und durch die Eigenschaft, dass sie in niedrigeren Konzentrationen (0,05 bis 0,5 Gew.-%) eine effektivere Verdickung bewirken, im Gegensatz zu Verdickern auf Aluminiumsilikat-Basis, die in höheren Konzentrationen (0,1 bis 2,5 Gew.-%) eingesetzt werden können - eine Eigenschaft, welche eigentlich gegen ihre Verwendung in hochbeladenen Suspensionskonzentraten spricht, da eine zu effektive Verdickung hier sofort zu unerwünschten Verfestigungen führt.
Beispiele für Verdicker auf Basis anionischer Heteropolysaccharide aus der Gruppe Xanthan gum sind u.a. die Rhodopol®-Produkte von Rhodia, welche fälschlicherweise in EP 1790228 A1 generisch, ohne weitere Spezifikation von speziellen Produkten hieraus den Verdickern auf Aluminiumsilikat-Basis zugeordnet wurden. Bisher bekannte Handelsprodukte aus dieser Gruppe sind Rhodopol 23®, Rhodopol G®, Rhodopol 50 MD®, Rhodicare T®, Kelzan®, Kelzan S® und Satiaxane CX91®, die auch bevorzugt sind.
Der Anteil an Verdickern (Komponente C) auf Basis anionischer Heteropolysaccharide aus der Gruppe Xanthan gum in den erfindungsgemäßen Suspensionskonzentraten beträgt 0,05 - 0,30 Gew.-%, bevorzugt 0,10 - 0,20 Gew.-%.

Bei den Netzmitteln (Komponente D) handelt es sich um C₁₀-C₂₄-Alkohole, die alkoxyliert sein können, z.B. mit 1 - 60 Alkylenoxideinheiten, vorzugsweise 1-60 EO und/oder 1-30 PO und/oder 1-15 BO in beliebiger Reihenfolge. Die terminalen Hydroxygruppen dieser Verbindungen können durch einen Alkyl-, Cycloalkyl- oder Acylrest mit 1-24 Kohlenstoffatomen endgruppenverschlossen sein.
Beispiele für derartige Netzmittel sind u.a. Genapol®C-,L-,O-,T-,UD-,UDD-,X-Produkte von Clariant, Plurafac®- und Lutensol®A-,AT-,ON-,TO-Produkte von BASF, Marlipal®24- und O13 Produkte von Condea, Dehypon®-Produkte von Henkel, Ethylan®-Produkte von Akzo-Nobel wie Ethylan CD 120, Zubereitungen ethoxylierter Fettalkohole, wie Atlox 4894® von Uniqema. Bevorzugt ist Atlox 4894®.

Der Anteil an Netzmitteln (Komponente D) in den erfindungsgemäßen Suspensionskonzentraten beträgt 0,1 - 10 Gew.-%, bevorzugt 0,2 - 5 Gew.-%, besonders bevorzugt 1 - 3 Gew.-%.

Bei den Entschäumern (Komponente E) handelt es sich beispielsweise um oberflächenaktive Verbindungen auf Silikon- bzw. Silanbasis wie die "TEGO® Antifoam"-Reihe von Evonik und die SE®-, SD®- und SRE®-Produkte von Wacker, sowie die Produktreihen Bevaloid® von Rhöne-Poulenc, Rhodorsil® von Bluestar Silicones, Silcolapse® von ACC und die Dow Corning "Antifoam Emulsions"; wie auch um per- oder polyfluorierte oberflächenaktive Verbindungen wie Fluowet®-Produkte von Clariant, die Bayowet®-Produkte von Bayer, die Zonyl®-Produkte von DuPont und Produkte dieser Art von Daikin und Asahi Glass; und auf Acetylenbasis, wie beispielsweise solche von Air Products, in Frage. Bevorzugt sind Rhodorsil®-Produkte, insbesondere Rhodorsil 454®.

Der Anteil an Entschäumern (Komponente E) in den erfindungsgemäßen Suspensionskonzentraten beträgt 0 - 1,5 Gew.-%, bevorzugt 0,05 - 1 Gew.-%, besonders bevorzugt 0,1 - 0,5 Gew.-%,.

Als Frostschutzmittel (Komponente F) kommen beispielsweise in Frage Glykol, Propylenglycol, Glyzerin oder Harnstoff. Bevorzugt ist Propylenglycol.

Der Anteil an Frostschutzmitteln (Komponente F) in den erfindungsgemäßen Suspensionskonzentraten beträgt 0 - 20 Gew.-%, bevorzugt 1 - 15 Gew.-%, besonders bevorzugt 2 - 10 Gew.-%.

Als Konservierungsmittel (Komponente G) sind bakterizide und fungizide Zubereitungen von Substanzen aus der Gruppe der Isothiazolinone geeignet. Beispiele sind die Produkte aus der Proxel®-Reihe von Arch UK Biocides oder aus der Acticide®-Reihe von Thor-Chemie. Bevorzugt Als Konservierungsmittel (Biozid) ist Acticide MBS®.

Der Anteil an Konservierungsmitteln (Komponente G) in den erfindungsgemäßen Suspensionskonzentraten beträgt 0 - 1 Gew.-%, bevorzugt 0,01 - 0,5 Gew.-%.

Beispiele für weitere, von den zuvor genannten Komponenten verschiedene Tenside (Komponente H) sind nachfolgend aufgeführt, worin EO=Ethylenoxid-Einheiten, PO=Propylenoxid-Einheiten und BO=Butylenoxid-Einheiten bedeutet:
1) Anionische Derivate von C₁₀-C₂₄-Alkohole, die alkoxyliert sein können (z.B. mit 1 - 60 Alkylenoxideinheiten, vorzugsweise 1-60 EO und/oder 1-30 PO und/oder 1-15 BO in beliebiger Reihenfolge, wobei die terminalen Hydroxygruppen dieser Verbindungen durch einen Alkyl-, Cycloalkyl- oder Acylrest mit 1-24 Kohlenstoffatomen endgruppenverschlossen sein können) in Form von Ethercarboxylaten, Sulfonaten, Sulfaten und Phosphaten und deren anorganischen (z.B. Alkali und Erdalkali) und organischen Salzen (z.B. auf Amin- oder Alkanolaminbasis) wie Genapol®LRO, Sandopan®-Produkte, Hostaphat/Hordaphos®-Produkte von Clariant.
   Copolymere bestehend aus EO, PO und/oder BO Einheiten wie zum Beispiel Blockcopolymere wie die Pluronic®-Produkte von der BASF und die Synperonic®-Produkte von Uniqema mit einem Molekulargewicht von 400 bis 10⁸.
   Alkylenoxydaddukte von C₁-C₉-Alkoholen wie Atlox®5000 von Uniqema oder Hoe®-S3510 von Clariant.
2) Fettsäure- und Triglyceridalkoxylate wie die Serdox®NOG-Produkte von Condea oder alkoxylierte Pflanzenöle wie Sojaöl, Rapsöl, Maiskeimöl, Sonnenblumenöl, Baumwollsaatöl, Leinöl, Kokosöl, Palmöl, Distelöl, Walnussöl, Erdnussöl, Olivenöl oder Rhizinusöl, insbesondere Rapsöl, wobei unter den Pflanzenölen auch deren Umesterungsprodukte verstanden werden, z.B. Alkylester wie Rapsölmethylester oder Rapsölethylester, beispielsweise die Emulsogen®-Produkte von Clariant, Salze von aliphatischen, cycloaliphatischen und olefinischen Carbonsäuren und Polycarbonsäuren, sowie Alpha-Sulfofettsäureester wie von Henkel erhältlich.
3) Fettsäureamidalkoxylate wie die Comperlan®-Produkte von Henkel oder die Amam®-Produkte von Rhodia.
   Alkylenoxydaddukte von Alkindiolen wie die Surfynol®-Produkte von Air Products. Zuckerderivate wie Amino- und Amidozucker von Clariant, Glukitole von Clariant, Alkylpolyglycoside in Form der APG®-Produkte von Henkel oder wie Sorbitanester in Form der Span®- oder Tween®-Produkte von Uniqema oder Cyclodextrinester oder -ether von Wacker.
4) Oberflächenaktive Cellulose- und Algin-, Pektin- und Guarderivate wie die Tylose®-Produkte von Clariant, die Manutex®-Produkte von Kelco und Guarderivate von Cesalpina.
   Alkylenoxydaddukte auf Polyolbasis wie Polyglykol®-Produkte von Clariant. Grenzflächenaktive Polyglyceride und deren Derivate von Clariant.
5) Sulfosuccinate, Alkansulfonate, Paraffin- und Olefinsulfonate wie Netzer IS®, Hoe®S1728, Hostapur®OS, Hostapur®SAS von Clariant, Triton®GR7ME und GR5 von Union Carbide, Empimin®-Produkte von Albright und Wilson, Marlon®-PS65 von Condea.
6) Sulfosuccinamate wie die Aerosol®-Produkte von Cytec oder die Empimin®-Produkte von Albright und Wilson.
7) Alkylenoxidaddukte von Fettaminen, quartäre Ammonium-Verbindungen mit 8 bis 22 Kohlenstoffatomen (C₈-C₂₂) wie z.B. die Genamin®C,L,O,T-Produkte von Clariant.
8) Oberflächenaktive, zwitterionische Verbindungen wie Tauride, Betaine und Sulfobetaine in Form von Tegotain®-Produkte von Goldschmidt, Hostapon®T-und Arkopon®T-Produkte von Clariant.
9) Grenzflächenaktive Sulfonamide z.B. von Bayer.
10) Grenzflächenaktive Polyacryl- und Polymethacrylderivate wie die Sokalan®-Produkte von der BASF.
11) Oberflächenaktive Polyamide wie modifizierte Gelatine oder derivatisierte Polyasparginsäure von Bayer und deren Derivate.
12) Tensidische Polyvinylverbindungen wie modifiziertes Polyvinylpyrolidon wie die Luviskol®-Produkte von BASF und die Agrimer®-Produkte von ISP oder die derivatisierten Polyvinylacetate wie die Mowilith®-Produkte von Clariant oder die -butyrate wie die Lutonal®-Produkte von der BASF, die Vinnapas®-und die Pioloform®-Produkte von Wacker oder modifizierten Polyvinylalkohole wie die Mowiol®-Produkte von Clariant.
13) Oberflächenaktive Polymere auf Basis von Maleinsäureanhydrid und/oder Umsetzungsprodukten von Maleinsäureanhydrid, sowie Maleinsäureanhydrid und/oder Umsetzungsprodukte von Maleinsäureanhydrid beinhaltende Copolymere wie die Agrimer®-VEMA-Produkte von ISP.
14) Oberfächenaktive Derivate von Montan-, Polyethylen-, und Polypropylenwachsen wie die Hoechst®-wachse oder die Licowet®-Produkte von Clariant.
15) Oberflächenaktive Phosphonate und Phosphinate wie Fluowet®-PL von Clariant.
16) Poly- oder perhalogenierte Tenside wie beispielsweise Emulsogen®-1557 von Clariant.
17) Verbindungen, die formal die Umsetzungsprodukte der oben genannten Phenole mit Schwefelsäure oder Phosphorsäure darstellen und deren mit geeigneten Basen neutralisierte Salze, beispielsweise der saure Phosphorsäureester des dreifach ethoxylierten Phenols, der saure Phosphorsäureester eines mit 9 mol Ethylenoxid umgesetzten Nonylphenols und der mit Triethanolamin neutralisierte Phosphorsäureester des Reaktionsproduktes von 20 mol Ethylenoxid und 1 mol Tristyrylphenol.
18) Benzolsulfonate wie Alkyl- oder Arylbenzolsulfonate, z.B. saure und mit geeigneten Basen neutralisierte (Poly)alkyl- und (Poly)aryl-benzolsulfonate, beispielsweise mit 1 bis 12 C-Atomen pro Alkylrest bzw. mit bis zu 3 Styroleinheiten im Polyarylrest, vorzugsweise (lineare) Dodecylbenzolsulfonsäure und deren öl-lösliche Salze wie beispielsweise das Calciumsalz oder das Isopropylammoniumsalz der Dodecylbenzolsulfonsäure. Bei den Alkylenoxy-Einheiten sind Ethylenoxy (EO)-, Propylenoxy (PO)- und Butylenoxy (BO)- Einheiten, insbesondere Ethylenoxy-Einheiten bevorzugt.

Es kommen auch ionische Emulgatoren und Dispergatoren in Frage, z.B.: Polyelektrolyte, wie Ligninsulfonate, wie Polyfon® O, Vanisperse® CB, Borresperse® 3A (Borregard).

Beispiele für Tenside aus der Gruppe der Tenside auf nichtaromatischer Basis sind die Tenside der vorstehend genannten Gruppen 1) bis 16), vorzugsweise der Gruppen 1), 2), 6) und 8).

Beispiele für Tenside aus der Gruppe der Tenside auf Aromatenbasis sind die Tenside der vorstehend genannten Gruppen 17) und 18), vorzugsweise
mit 4 bis 10 mol Ethylenoxid umgesetztes Phenol, kommerziell beispielsweise in Form der Agrisol®-Produkte (Akcros) erhältlich,
mit 4 bis 50 mol Ethylenoxid umgesetztes Nonylphenol, kommerziell beispielsweise in Form der Arkopal®-Produkte (Clariant) erhältlich,
mit 1 bis 50 mol Ethylenoxid umgesetztes Tristyrylphenol, beispielsweise aus der Soprophor®-Reihe (Rhodia) wie Soprophor® FL, Soprophor® 4D-384, und saures (lineares) Dodecylbenzolsulfonat, kommerziell beispielsweise in Form der Marlon®-Produkte (Hüls) erhältlich.

Bei Tensiden auf Basis substituierter Phenolether handelt es sich beispielsweise um mono-, di-, und bevorzugt trisubstituierte Phenole, die alkoxyliert sein können, z.B. ethoxyliert und/oder propoxyliert und/oder butoxyliert. Hierbei kann die Anzahl der Alkylenoxy-Einheiten im Bereich zwischen 1 und 100 liegen, vorzugsweise 3 - 60, besonders bevorzugt 5 - 25. Phenolsubstituenten sind bevorzugt Styryl- oder Isoalkylreste. Beispiele sind Phenyl-(C₁-C₄)alkyl-ether oder (poly)alkoxylierte Phenole [= Phenol-(poly)alkylenglykolether], beispielsweise mit 1 bis 50 Alkylenoxy-Einheiten im (Poly)alkylenoxyteil, wobei der Alkylenteil vorzugsweise jeweils 2 bis 4 C-Atome aufweist, vorzugsweise mit 3 bis 10 mol Alkylenoxid umgesetztes Phenol, (Poly)alkylphenole oder (Poly)alkylphenolalkoxylate [= Polyalkylphenol-(poly)alkylenglykolether], beispielsweise mit 1 bis 12 C-Atomen pro Alkylrest und 1 bis 150 Alkylenoxy-Einheiten im Polyalkylenoxyteil, vorzugsweise mit 1 bis 50 mol Ethylenoxid umgesetztes Tri-n-butylphenol oder Triisobutylphenol, Polyarylphenole oder Polyarylphenolalkoxylate [= Polyarylphenol-(poly)alkylenglykolether], beispielsweise Tristyrylphenolpolyalkylenglykolether mit 1 bis 150 Alkylenoxy-Einheiten im Polyalkylenoxyteil, vorzugsweise mit 1 bis 50 mol Ethylenoxid umgesetztes Tristyrylphenol.
Beispiele für derartige Tenside sind Soprophor® 3D33, Soprophor® BSU, Soprophor® CY/8 (Rhodia) und Hoe® S3474 und in Form der Sapogenat® T-Produkte (Clariant), beispielsweise Sapogenat® T 100.
Der Anteil an weiteren, von den zuvor genannten Komponenten verschiedenen Tensiden (Komponente H) in den erfindungsgemäßen Suspensionskonzentraten beträgt 0 - 10 Gew.-%.

Eine besonders bevorzugte Ausführungsform sind erfindungsgemäße Suspensionskonzentrate, worin enthalten sind
(A) 48 - 57 Gew.-% des Wirkstoffs Metribuzin,
(B) 2 - 10 Gew.-% eines oder mehrerer Tenside auf Basis nicht-ionischer Polymere aus der Gruppe 'acrylic grafted polymers', vorzugsweise 3 - 6 Gew.-% Atlox 4913® und/oder Tersperse 2500®,
(C) 0,05 - 0,3 Gew.-% eines oder mehrerer Verdicker auf Basis anionischer Heteropolysaccharide aus der Gruppe Xanthan gum, vorzugsweise 0,1 - 0,2 Gew.-% Rhodopol 23®, Rhodopol G®, Rhodopol 50 MD®, Rhodicare T®, Kelzan®, Kelzan S® und/oder Satiaxane CX91®,
(D) 0,2 - 5 Gew.-% eines oder mehrerer Netzmittel, vorzugsweise 1 - 3 Gew.-% Atlox 4894®,
(E) 0,05 - 1 Gew.-% eines oder mehrerer Entschäumer, vorzugsweise 0,1 - 0,5 Gew.-% Rhodorsil 454®,
(F) 1 - 15 Gew.-% eines oder mehrerer Frostschutzmittels, vorzugsweise 2 - 10 Gew.-% Propylenglycol,
(G) 0,01 - 0,5 Gew.-% eines oder mehrerer Konservierungsmittels, vorzugsweise Acticide MBS®,
(H) 0 - 10 Gew.-% eines oder mehrerer weitere, von den zuvor genannten Komponenten verschiedene Tenside.

Die Herstellung der erfindungsgemäßen Suspensionskonzentrate erfolgt in bekannter Weise (siehe Winnacker-Küchler, "Chemische Technologie", Band 7, C. Hanser Verlag München, 4. Aufl. 1986).Hierbei wird zunächst der Wirkstoff durch Rühren in eine wässrige Lösung eingearbeitet, die die Formulierungshilfsstoffe wie Dispersions- und Netzmittel, Konservierungsmittel, Antischaummittel, Frostschutzmittel und gegebenenfalls andere Zusätze enthält.

Die Zerkleinerung des Wirkstoffes erfolgt dann in der Regel in zwei Schritten:
1. (Vorvermahlung) Erhalt einer Teilchengröße von ca. <200 µm mit Hilfe von Kolloidmühlen, wie z.B. Zahnkolloidmühlen der Fa. Probst & Claasen.
2. (Feinvermahlung) Erhalt der abschließend gewünschten Teilchengröße durch Nassvermahlung, z.B. in Perlmühlen (beispielsweise mit diskontinuierlichen Perlmühlen, wie z.B. von der Fa. Drais, oder mit kontinuierlichen Perlmühlen, wie z.B. von der Fa. Bachofen).

Die Verdicker auf Basis anionischer Heteropolysaccharide werden nach dem Schritt der Feinvermahlung in das fertige Produkt eingearbeitet. Dies geschieht entweder durch einfaches Einrühren oder, gegebenenfalls, unter Anwendung hoher Scherkräfte mittels einer Kolloidmühle. Im Gegensatz dazu können beim Einsatz mineralischer Aluminiumsilikat-Verdicker diese von Anfang an, z.B. zusammen mit dem Wirkstoff, eingearbeitet und über die verschiedenen Mahlprozesse mit vermahlen werden.

Die Erfindung beschreibt weiterhin Mittel, erhältlich aus dem erfindungsgemäßen Suspensionskonzentrat durch Verdünnen mit Flüssigkeiten, bevorzugt Wasser. Es kann vorteilhaft sein, den so erhaltenen Mitteln weitere Wirkstoffe, bevorzugt agrochemische Wirkstoffe (z.B. als Tankmischpartner in Form entsprechender Formulierungen) und/oder zur Anwendung übliche Hilfs- und Zusatzstoffe, z.B. selbstemulgierende Öle wie Pflanzenöle oder Paraffinöle und/oder Düngemittel zuzugeben. Gegenstand der vorliegenden Erfindung sind daher auch solche Mittel, bevorzugt herbizide, auf Basis der erfindungsgemäßen Suspensionskonzentrate. Eine besondere Ausführungsform der Erfindung betrifft die Verwendung der aus den erfindungsgemäßen Suspensionskonzentraten erhältlichen Mittel zur Bekämpfung von unerwünschtem Pflanzenwuchs, im folgenden als "herbizides Mittel" bezeichnet. Die herbiziden Mittel weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden gut erfasst. Dabei können die herbiziden Mittel z.B. im Vorsaat-, Vorauflauf- oder Nachauflaufverfahren ausgebracht werden. Im einzelnen seien beispielhaft einige Vertreter der mono- und dikotylen Unkrautflora genannt, die durch die herbiziden Mittel kontrolliert werden können, ohne dass durch die Nennung eine Beschränkung auf bestimmte Arten erfolgen soll.

Auf der Seite der monokotylen Unkrautarten werden z.B. Apera spica venti, Avena spp., Alopecurus spp., Brachiaria spp., Digitaria spp., Lolium spp., Echinochloa spp., Panicum spp., Phalaris spp., Poa spp., Setaria spp. sowie Bromus spp. wie Bromus catharticus, Bromus secalinus, Bromus erectus, Bromus tectorum und Bromus japonicus und Cyperusarten aus der annuellen Gruppe und auf seiten der perennierenden Spezies Agropyron, Cynodon, Imperata sowie Sorghum und auch ausdauernde Cyperusarten gut erfasst.

Bei dikotylen Unkrautarten erstreckt sich das Wirkungsspektrum auf Arten wie z.B. Abutilon spp., Amaranthus spp., Chenopodium spp., Chrysanthemum spp., Galium spp. wie Galium aparine, Ipomoea spp., Kochia spp., Lamium spp., Matricaria spp., Pharbitis spp., Polygonum spp., Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden Unkräutern.

Unter den spezifischen Kulturbedingungen im Reis vorkommende Schadpflanzen wie z.B. Echinochloa, Sagittaria, Alisma, Eleocharis, Scirpus und Cyperus werden von den herbiziden Mitteln ebenfalls hervorragend bekämpft.

Werden die herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so dass auf diese Weise eine für die Kulturpflanzen schädliche Unkrautkonkurrenz sehr früh und nachhaltig beseitigt wird.

Die herbiziden Mittel zeichnen sich durch eine schnell einsetzende und lang andauernde herbizide Wirkung aus. Die Regenfestigkeit der Wirkstoffe in den herbiziden Mitteln ist in der Regel günstig. Als besonderer Vorteil fällt ins Gewicht, dass die in den herbiziden Mitteln verwendeten und wirksamen Dosierungen von herbiziden Verbindungen so gering eingestellt werden können, dass ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäße Kombination von Wirkstoffen wird eine erhebliche Reduzierung der nötigen Aufwandmenge der Wirkstoffe ermöglicht.

Die genannten Eigenschaften und Vorteile sind in der praktischen Unkrautbekämpfung von Nutzen, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen herbiziden Mittel hinsichtlich der beschriebenen Eigenschaften deutlich übertroffen.

Obgleich die herbiziden Mittel eine ausgezeichnete herbizide Aktivität gegenüber mono- und dikotylen Unkräutern aufweisen, werden Kulturpflanzen wirtschaftlich bedeutender Kulturen z.B. zweikeimblättriger Kulturen wie Soja, Baumwolle, Raps, Zuckerrüben, oder Gramineen-Kulturen wie Weizen, Gerste, Roggen, Hafer, Hirse, Reis oder Mais, nur unwesentlich oder gar nicht geschädigt. Die vorliegenden herbiziden Mittel eignen sich aus diesen Gründen sehr gut zur selektiven Bekämpfung von unerwünschtem Pflanzenwuchs in landwirtschaftlichen Nutzpflanzungen oder in Zierpflanzungen.

Darüber hinaus weisen die entsprechenden herbiziden Mittel hervorragende wachstumsregulatorische Eigenschaften bei Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die herbiziden Mittel auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Bevorzugt ist die Anwendung der herbiziden Mittel in wirtschaftlich bedeutenden transgenen Kulturen von Nutz- und Zierpflanzen, z. B. von Gramineen-Kulturen wie Weizen, Gerste, Roggen, Hafer, Hirse, Reis und Mais oder auch Kulturen von Zuckerrübe, Baumwolle, Soja, Raps, Kartoffel, Tomate, Erbse und anderen Gemüsesorten. Vorzugsweise können die herbiziden Mittel in Nutzpflanzenkulturen eingesetzt werden, welche gegenüber den phytotoxischen Wirkungen der Herbizide resistent sind bzw. gentechnisch resistent gemacht worden sind.

Bei der Anwendung der herbiziden Mittel in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den weiteren herbiziden Wirkstoffen, gegenüber denen die transgene Kultur resistent ist, sowie Beeinflussung von Wuchs und Ertrag der transgenen Kulturpflanzen.

Gegenstand der vorliegenden Erfindung ist somit auch ein Verfahren zur Bekämpfung von unerwünschtem Pflanzenwuchs, vorzugsweise in Pflanzenkulturen wie Getreide (z.B. Weizen, Gerste, Roggen, Hafer, Reis, Mais, Hirse), Zuckerrübe, Zuckerrohr, Raps, Baumwolle und Soja, besonders bevorzugt in monokotylen Kulturen wie Getreide, z.B. Weizen, Gerste, Roggen, Hafer, Kreuzungen davon wie Triticale, Reis, Mais und Hirse, dass dadurch gekennzeichnet ist, dass man die erfindungsgemäßen herbiziden Mittel auf die Schadpflanzen, Pflanzenteile, Pflanzensamen oder die Fläche auf der die Pflanzen wachsen, z.B. die Anbaufläche appliziert.

Die Pflanzenkulturen können auch gentechnisch verändert oder durch Mutationsselektion erhalten sein und sind bevorzugt tolerant gegenüber Acetolactatsynthase (ALS)-Inhibitoren.

Die erfindungsgemäßen Suspensionskonzentrate ergeben Langzeit lagerstabile und anwendungstechnisch einwandfreie und verbesserte Formulierungen.

Sie verfügen über eine niedrige Viskosität und damit verbunden über gute Fließeigenschaften. Hierdurch ist es u.a. dem Anwender möglich genau dosierte Teilmengen aus einem Gebinde zu entnehmen. Außerdem ermöglicht die niedrige Viskosität, dass Gebinde, die das erfindungsgemäße Suspensionskonzentrat enthalten, restlos entleert werden können.

Die erfindungsgemäßen Suspensionskonzentrate, zeigen zusätzlich und überraschenderweise hervorragende dispergierende und stabilisierende Eigenschaften nach dem weiteren Verdünnen mit Flüssigkeiten, bevorzugt Wasser.

So wird in der Spritzbrühe eine stabile Dispersion erhalten, in der die hoch verdünnte Wirkstoffkonzentration über mehrere Stunden vor der Applikation stabil ist.

Erstaunlich in diesem Zusammenhang ist, dass bei den erfindungsgemäßen Suspensionskonzentraten dies mit dem Tensid auf Basis nicht-ionischer Polymere aus der Gruppe 'acrylic grafted polymers' (Komponente B), welches als einziges Dispersionsmittel dient, und einer sehr geringen Konzentration des Verdickungsmittels (Komponente C) von 0,05 - 0,3 Gew.-% erreicht wird. Dies steht im Gegensatz zur technischen Lehre aus dem Bereichs der Formulierungen für die Saatgut-Behandlung, wie beispielsweise WO 2009/021985 A2, die bei der Verwendung einer Kombination aus 2 Dispersionsmitteln eine erheblich höhere Konzentration an Verdickungsmittel (> 1 Gew.-%) benötigt.

### Beispiele

### 1. Herstellung:

### 1.1 Formulierungsbeispiel Nr. 1 (Erfindungsgemäß)

Wasser wird in einem Kessel vorgelegt und über eine Kolloidmühle im Kreislauf umgepumpt. Es werden die Grundkomponenten, wie Tensid (z.B. Atlox 4913®) und Netzmittel (z.B. Atlox 4894®) und die optionalen Komponenten (Formulierungshilfsstoffe), wie beispielsweise Entschäumer (z.B. Rhodorsil 454®), Frostschutzmittel (z.B. Propylenglycol) und/oder Konservierungsmittel (z.B. Acticide MBS®) wie auch noch weitere, von den zuvor genannten Komponenten verschiedene Tenside zugegeben. Als letzte Komponente wird der Wirkstoff zugefügt. Danach wird die gesamte Mischung über die Kolloidmühle in einen weiteren Kessel überführt. Diese Mischung wird dann durch Nassvermahlung mittels Perlmühlen vermahlen. Nach der Nassvermahlung wird dann Verdicker auf Basis anionischer Heteropolysaccharide (z.B. Rhodopol 23®) mittels einer Kolloidmühle unter "high-shear" Rühren in das Fertigprodukt eingearbeitet.

### 1.2 Formulierungsbeispiele Nr. 2 und 3 (Stand der Technik)

Wasser wird in einem Kessel vorgelegt und über eine Kolloidmühle im Kreislauf umgepumpt. Es werden die Verdicker auf Aluminiumsilikatbasis (z.B. Attagel 40®; Bentone EW®) und weitere Formulierungshilfsmittel, wie beispielsweise Entschäumer (z.B. Rhodorsil 454®), Frostschutzmittel (z.B. Propylenglycol) und/oder Konservierungsmittel (z.B. Acticide MBS®) zugegeben, gefolgt von den Tensiden (z.B. Vanisperse CB®, Soprophor CY/8®) und gegebenenfalls Netzmitteln (z.B. Hostapon T PHC®). Als letzte Komponente wird der Wirkstoff zugefügt. Danach wird die gesamte Mischung über die Kolloidmühle in einen weiteren Kessel überführt. Diese Mischung wird dann durch Nassvermahlung mittels Perlmühlen vermahlen. Bei Formulierungsbeispiel 3 wird der hauptsächliche Verdicker auf Aluminiumsilikatbasis (Attagel 40®) durch einen Verdicker auf Basis anionischer Heteropolysaccharide (Rhodopol 23®) ersetzt, welcher in gleicher Weise eingearbeitet wird wie in Formulierungsbeispiel 1 beschrieben (nach der Nassvermahlung).

### 2. Zusammensetzungen:

**Tabelle 1 - Formulierungsbeispiele Nr. 1 - 3**

| Komponente | | Formulierungsbeispiele / In haltsstoffe | Nr. 1 Erfindungsgemäß | Nr. 2 Stand der Technik ²⁾ | Nr. 3 Stand der Technik ⁵⁾ |
|---|---|---|---|---|---|
| A | | Metribuzin (reiner Wirkstoff in g/L) | 55,74 ¹⁾ (600) | 65,03 ³⁾ (700) | 65,03 ³⁾ (700) |
| B | | Atlox 4913® | 4,00 | | |
| | analog | Vanisperse CB® | | 2,50 | 1,50 |
| C | | Rhodopol 23® | 0,15 | | 0,10 |
| | analog | Attagel 40® ⁴⁾ | | 0,30 | |
| | analog | Bentone EW®⁴⁾ | | 0,10 | 0,10 |
| D | | Atlox 4894® | 2,00 | | |
| | analog | Hostapon T PHC® | | 0,50 | |
| E | | Rhodorsil 454® | 0,20 | 0,20 | 0,20 |
| F | | Propylenglycol | 5,00 | | 2,00 |
| G | | Acticide MBS® | 0,20 | | 0,20 |
| H | | Soprophor CY/8® | | | 0,50 |
| ad 100 | | Wasser | ad 100 | ad 100 | ad 100 |

| | | | | | |
|---|---|---|---|---|---|
| Alle Angaben in Gew.-% 1) Technischer Wirkstoff (93,6%) = 52,17 % reiner Wirkstoff 2) Analog zu den Formulierungsbeispielen Nr. 1 und 2 aus EP 1790228 A1 3) Technischer Wirkstoff (93,6%) = 60,87 % reiner Wirkstoff 4) Verdicker auf Aluminiumsilikatbasis 5) Verwendung eines Rhodopol-Produkts analog der Lehre von EP 1790228 A1 | | | | | |

### 3. Untersuchungsmethoden:

### 3.1 Bestimmung der Viskosität gemäß CIPAC MT 192

Die Bestimmung der Viskositäten erfolgte gemäß CIPAC Methode MT 192 und wurde mit einem handelsüblichen Rotationsviskosimeter der Fa. Haake bestimmt. Zur Charakterisierung der Fließeigenschaften wurden die Viskositäten bei zwei unterschiedlichen Schergeschwindigkeiten gemessenen: bei 20 ^{s-1} und bei 100 ^{s-1}.

### 3.2 Bestimmung des Nass-Siebrückstand

Die Bestimmung des Nass-Siebrückstands erfolgte gemäß der CIPAC Methode MT 59.3 mit Hilfe eines Siebsatzes mit den entsprechenden Maschenweiten.

### 3.3 Bestimmung der Teilchengröße

Die Bestimmung der Teilchengröße erfolgte gemäß der CIPAC Methode MT 187 mit Hilfe einer Laser-Diffraktionsanalyse.

### 4. Ergebnisse:

**Tabelle 2 - Physiko-chemische Daten der erfindungsgemäßen Suspensionskonzentrate (Formulierungsbeispiel Nr. 1)**

| Kriterium / Messparameter | | Anfangswert | Wert nach 2 Wochen Lagerung bei 54°C |
|---|---|---|---|
| Viskosität (CIPAC MT 192) | 20^{s-1 1)} | 427 mPas | 424 mPas |
| | 100^{s-1 1)} | 273 mPas | 249 mPas |
| Nass-Siebrückstand (CIPAC MT 59.3) | 150 µm ²⁾ | 0% | 0% |
| | 45 µm ²⁾ | 0,01 % | 0,02 % |
| Teilchengröße (CIPAC MT 187) | d(50%) ³⁾ | 3,8 µm | 11,0 µm |
| | d(90%) ³⁾ | 9,2 µm | 25,9 µm |

| | | | |
|---|---|---|---|
| Anmerkungen: 1) Schergeschwindigkeit 2) Maschenweite (und prozentualer Anteil der hierauf verbliebenen Rückstände) 3) 50 bzw. 90 Volumen-% aller Partikel liegen unterhalb des angegebenen Durchmessers | | | |

Kommentar: Die Viskosität von Suspensionskonzentraten muss einerseits genügend hoch sein, um eine Sedimentation der dispergierten Wirkstoffpartikel zu unterdrücken. Andererseits sollte versucht werden, eine möglichst niedrige Viskosität und, damit verbunden, gute Fließeigenschaften zu erreichen. Hierdurch soll es dem Anwender ermöglicht werden, genau dosierte Teilmengen aus einem Gebinde zu entnehmen. Außerdem sollten sich Gebinde, die Pflanzenschutzmittel enthalten, restlos entleeren lassen; dies erfordert niedrige Viskosität von flüssigen Zubereitungen. Die Viskosität von Suspensionskonzentraten, die die beschriebenen Anforderungen erfüllt, liegt erfahrungsgemäß im Bereich von etwa 100 mPas bis 500 mPas (gemessen bei 100 ^{s-1}). Dies wird durch die erfindungsgemäßen Suspensionskonzentrate - auch nach Lagerung - in idealer Weise in vollem Umfang erfüllt. Daneben zeigen die weiteren physiko-chemischen Daten vorteilhafte Eigenschaften der erfindungsgemäßen Suspensionskonzentrate.

**Tabelle 3 - Vergleich der Viskosität (Fließeigenschaften)**

| Formulierungsbeispiele / Kriterium / Messparameter | | Nr. 1 Erfindungsgemäß | Nr. 2 Stand der Technik ²⁾ |
|---|---|---|---|
| Viskosität (CIPAC MT 192) | 20^{s-1 1)} | 427 mPas | 1983 mPas |
| | 100^{s-1 1)} | 273 mPas | 1938 mPas |

| | | | |
|---|---|---|---|
| Anmerkungen: 1) Schergeschwindigkeit 2) Analog zu den Formulierungsbeispielen Nr. 1 und 2 aus EP 1790228 A1 | | | |

Kommentar: Im Gegensatz zur dickflüssigen Formulierung des Stands der Technik (> 500 mPas bei 100 ^{s-1}) ist die Fließfähigkeit des erfindungsgemäßen Suspensionskonzentrats wegen der niedrigen Viskosität (zwischen 100 - 500 mPas bei 100 ^{s-1}) erheblich verbessert.

**Tabelle 4 - Vergleich der Fließeigenschaften nach Lagerung**

| Form ulierungsbeispiele | Fließeigenschaften | |
|---|---|---|
| | Anfangswert | Wert nach 1 Monat Lagerung bei 40°C |
| Nr. 1 (Erfindungsgemäß) | fließfähig | fließfähig |
| Nr. 2 (Stand der Technik ¹⁾) | (bedingt) fließfähig | (bedingt) fließfähig |
| Nr. 3 (Stand der Technik ²⁾) | fließfähig | verfestigt |

| | | |
|---|---|---|
| Anmerkungen: 1) Analog zu den Formulierungsbeispielen Nr. 1 und 2 aus EP 1790228 A1 2) Verwendung eines Rhodopol-Produkts analog der Lehre von EP 1790228 A1 | | |

Kommentar: Im Gegensatz zum erfindungsgemäßen Suspensionskonzentrat erwies sich die Formulierung des Stands der Technik Nr. 3 bei der ein Rhodopol-Produkt verwendet wurde, als nicht lagerstabil.

## Patentansprüche

1. Aluminiumsilikat-freies, wässriges Suspensionskonzentrat, enthaltend folgende Komponenten
(A) 43 - 61 Gew.-% des Wirkstoffs Metribuzin,
(B) 2 - 10 Gew.-% eines oder mehrerer Tenside auf Basis nicht-ionischer Polymere aus der Gruppe 'acrylic grafted polymers',
(C) 0,05 - 0,3 Gew.-% eines oder mehrerer Verdicker auf Basis anionischer Heteropolysaccharide aus der Gruppe Xanthan gum,
(D) 0,1 - 10 Gew.-% eines oder mehrerer Netzmittel ausgewählt aus der Gruppe der alkoxylierten C₁₀-C₂₄-Alkohole
(E) 0 - 1 Gew.-% eines oder mehrerer Entschäumer,
(F) 0 - 20 Gew.-% eines oder mehrerer Frostschutzmittels,
(G) 0 - 1 Gew.-% eines oder mehrerer Konservierungsmittels, und
(H) 0 - 10 Gew.-% eines oder mehrerer weitere, von den zuvor genannten Komponenten verschiedene Tenside.

2. Suspensionskonzentrat gemäß Anspruch 1, enthaltend
(A) 48 - 57 Gew.-% des Wirkstoffs Metribuzin,
(B) 2 - 10 Gew.-% eines oder mehrerer Tenside auf Basis nicht-ionischer Polymere aus der Gruppe 'acrylic grafted polymers',
(C) 0,05 - 0,3 Gew.-% eines oder mehrerer Verdicker auf Basis anionischer Heteropolysaccharide aus der Gruppe Xanthan gum,
(D) 0,2 - 5 Gew.-% eines oder mehrerer Netzmittel ausgewählt aus der Gruppe der alkoxylierten C₁₀-C₂₄-Alkohole,
(E) 0,05 - 1 Gew.-% eines oder mehrerer Entschäumer,
(F) 1 - 15 Gew.-% eines oder mehrerer Frostschutzmittels,
(G) 0,01 - 0,5 Gew.-% eines oder mehrerer Konservierungsmittels,
(H) 0 - 10 Gew.-% eines oder mehrerer weitere, von den zuvor genannten Komponenten verschiedene Tenside.

3. Suspensionskonzentrat gemäß Anspruch 1 oder 2, enthaltend
(A) 48 - 57 Gew.-% des Wirkstoffs Metribuzin,
(B) 3 -6 Gew.-% eines oder mehrerer Tenside auf Basis nicht-ionischer Polymere aus der Gruppe 'acrylic grafted polymers',
(C) 0,1 - 0,2 Gew.-% eines oder mehrerer Verdicker auf Basis anionischer Heteropolysaccharide aus der Gruppe Xanthan gum,
(D) 1 - 3 Gew.-% eines oder mehrerer Netzmittel ausgewählt aus der Gruppe der alkoxylierten C₁₀-C₂₄-Alkohole,
(E) 0,1 - 0,5 Gew.-% eines oder mehrerer Entschäumer,
(F) 2 - 10 Gew.-% eines oder mehrerer Frostschutzmittels,
(G) 0,01 - 0,5 Gew.-% eines oder mehrerer Konservierungsmittels,
(H) 0 - 10 Gew.-% eines oder mehrerer weitere, von den zuvor genannten Komponenten verschiedene Tenside.

4. Verwendung eines Suspensionskonzentrates gemäß einem oder mehreren der Ansprüche 1 bis 3 zur Bekämpfung unerwünschten Pflanzenwuchses.

5. Verfahren zur Bekämpfung von unerwünschtem Pflanzenwuchs, **dadurch gekennzeichnet, dass** ein Suspensionskonzentrat gemäß einem oder mehreren der Ansprüche 1 bis 3 auf die Schadpflanzen, Pflanzenteile, Pflanzensamen oder die Fläche auf der die Pflanzen wachsen, appliziert wird.

## Claims

1. An aluminum silicate-free, aqueous suspension concentrate, containing the following components
(A) 43 - 61 wt.% of the active substance metribuzin,
(B) 2 - 10 wt.% of one or more surfactants based on nonionic polymers from the 'acrylic grafted polymers' group,
(C) 0.05 - 0.3 wt.% of one or more thickeners based on anionic heteropoly-saccharides from the xanthan gum group,
(D) 0.1 - 10 wt.% of one or more wetting agents selected from the group of the alkoxylated C₁₀-C₂₄ alcohols,
(E) 0 - 1 wt.% of one or more antifoaming agents,
(F) 0 - 20 wt.% of one or more antifreeze agents,
(G) 0 - 1 wt.% of one or more preservatives, and
(H) 0 - 10 wt.% of one or more other surfactants differing from the aforesaid components.

2. The suspension concentrate as claimed in claim 1, containing
(A) 48 - 57 wt.% of the active substance metribuzin,
(B) 2 - 10 wt.% of one or more surfactants based on nonionic polymers from the 'acrylic grafted polymers' group,
(C) 0.05 - 0.3 wt.% of one or more thickeners based on anionic heteropoly-saccharides from the xanthan gum group,
(D) 0.2 - 5 wt.% of one or more wetting agents selected from the group of the alkoxylated C₁₀-C₂₄ alcohols,
(E) 0.05 - 1 wt.% of one or more antifoaming agents,
(F) 1 - 15 wt.% of one or more antifreeze agents,
(G) 0.01 - 0.5 wt.% of one or more preservatives,
(H) 0 - 10 wt.% of one or more other surfactants differing from the aforesaid components.

3. The suspension concentrate as claimed in claim 1 or 2, containing
(A) 48 - 57 wt.% of the active substance metribuzin,
(B) 3 - 6 wt.% of one or more surfactants based on nonionic polymers from the 'acrylic grafted polymers' group,
(C) 0.1 - 0.2 wt.% of one or more thickeners based on anionic heteropoly-saccharides from the xanthan gum group,
(D) 1 - 3 wt.% of one or more wetting agents selected from the group of the alkoxylated C₁₀-C₂₄ alcohols,
(E) 0.1 - 0.5 wt.% of one or more antifoaming agents,
(F) 2 - 10 wt.% of one or more antifreeze agents,
(G) 0,01 - 0.5 wt.% of one or more preservatives,
(H) 0 - 10 wt.% of one or more other surfactants differing from the aforesaid components.

4. The use of a suspension concentrate as claimed in one or more of claims 1 to 3 for the control of undesired plant growth.

5. A method for the control of undesired plant growth, **characterized in that** a suspension concentrate as claimed in one or more of claims 1 to 3 is applied onto the harmful plants, plant parts, plant seeds or the surface whereon the plants grow.

## Revendications

1. Concentré de suspension aqueux exempt de silicate d'aluminium, contenant les composants suivants :
(A) 43 à 61 % en poids de l'agent actif métribuzine,
(B) 2 à 10 % en poids d'un ou de plusieurs tensioactifs à base de polymères non ioniques du groupe des « acrylic grafted polymers »,
(C) 0,05 à 0,3 % en poids d'un ou de plusieurs épaississants à base d'hétéropolysaccharides anioniques du groupe de la gomme xanthane,
(D) 0,1 à 10 % en poids d'un ou de plusieurs agents mouillants choisis dans le groupe des alcools alcoxylés en C₁₀-C₂₄,
(E) 0 à 1 % en poids d'un ou de plusieurs agents antimousse,
(F) 0 à 20 % en poids d'un ou de plusieurs agents antigel,
(G) 0 à 1 % en poids d'un ou de plusieurs conservateurs, et
(H) 0 à 10 % en poids d'un ou de plusieurs tensioactifs supplémentaires, différents des composés mentionnés précédemment.

2. Concentré de suspension selon la revendication 1, contenant :
(A) 48 à 57 % en poids de l'agent actif métribuzine,
(B) 2 à 10 % en poids d'un ou de plusieurs tensioactifs à base de polymères non ioniques du groupe des « acrylic grafted polymers »,
(C) 0,05 à 0,3 % en poids d'un ou de plusieurs épaississants à base d'hétéropolysaccharides anioniques du groupe de la gomme xanthane,
(D) 0,2 à 5 % en poids d'un ou de plusieurs agents mouillants choisis dans le groupe des alcools alcoxylés en C₁₀-C₂₄,
(E) 0,05 à 1 % en poids d'un ou de plusieurs agents antimousse,
(F) 1 à 15 % en poids d'un ou de plusieurs agents antigel,
(G) 0,01 à 0,5 % en poids d'un ou de plusieurs conservateurs,
(H) 0 à 10 % en poids d'un ou de plusieurs tensioactifs supplémentaires, différents des composés mentionnés précédemment.

3. Concentré de suspension selon la revendication 1 ou 2, contenant :
(A) 48 à 57 % en poids de l'agent actif métribuzine,
(B) 3 à 6 % en poids d'un ou de plusieurs tensioactifs à base de polymères non ioniques du groupe des « acrylic grafted polymers »,
(C) 0,1 à 0,2 % en poids d'un ou de plusieurs épaississants à base d'hétéropolysaccharides anioniques du groupe de la gomme xanthane,
(D) 1 à 3 % en poids d'un ou de plusieurs agents mouillants choisis dans le groupe des alcools alcoxylés en C₁₀-C₂₄,
(E) 0,1 à 0,5 % en poids d'un ou de plusieurs agents antimousse,
(F) 2 à 10 % en poids d'un ou de plusieurs agents antigel,
(G) 0,01 à 0,5 % en poids d'un ou de plusieurs conservateurs,
(H) 0 à 10 % en poids d'un ou de plusieurs tensioactifs supplémentaires, différents des composés mentionnés précédemment.

4. Utilisation d'un concentré de suspension selon une ou plusieurs des revendications 1 à 3 pour lutter contre une végétation indésirable.

5. Procédé de lutte contre une végétation indésirable, **caractérisé en ce qu'**un concentré de suspension selon une ou plusieurs des revendications 1 à 3 est appliqué sur les plantes nocives, des parties de plantes, des graines de plantes ou la surface sur laquelle les plantes poussent.
